Europäisches Patentamt

European Patent Office

Office européen des brevets

(19)

(11) Veröffentlichungsnummer: **0 419 843 B1**

(12) **EUROPÄISCHE PATENTSCHRIFT**

(45) Veröffentlichungstag der Patentschrift: **02.11.94**

(51) Int. Cl.⁵: **C03C 8/20**, C03C 8/14

(21) Anmeldenummer: **90116050.7**

(22) Anmeldetag: **22.08.90**

(54) **Verfahren und Mittel zur Herstellung eines reliefartigen Dekors auf keramischen Oberflächen.**

(30) Priorität: **28.09.89 DE 3932424**

(43) Veröffentlichungstag der Anmeldung:
**03.04.91 Patentblatt 91/14**

(45) Bekanntmachung des Hinweises auf die
Patenterteilung:
**02.11.94 Patentblatt 94/44**

(84) Benannte Vertragsstaaten:
**AT DE ES FR GB IT NL**

(56) Entgegenhaltungen:
EP-A- 0 260 951
GB-A- 2 096 593
RO-A- 81 434
US-A- 3 380 846

CHEMICAL ABSTRACTS, Band 109, Nr. 22,
November 1988, Seite 364, ZusammenfassungNr. 195923c, Columbus, Ohio, US; & JP-
A-63 186 780 (SUMITOMO) 02-08-1988

(73) Patentinhaber: **Degussa Aktiengesellschaft
Weissfrauenstrasse 9
D-60311 Frankturt (DE)**

(72) Erfinder: **Riede-Klutmann, Karola
Waldstrasse 115
D-6078 Neu-Isenburg (DE)**
Erfinder: **Jerke, Wilan
Lärchenweg 8
D-6369 Niederdorfelden (DE)**
Erfinder: **Völker, Werner, Dr.
Auf dem Niederberg 45
D-6368 Bad Vilbel (DE)**

**Beschreibung**

Die Erfindung betrifft ein Verfahren zur Herstellung eines reliefartigen Dekors auf keramischen Oberflächen sowie um Mittel zur Ausführung des Verfahrens. Das reliefartige Dekor wird durch Einbrennen einer reliefbildenden Glasfritte gebildet und enthält in diesem selbst und/oder auf diesem farbgebende Komponenten. Bei den Mitteln handelt es sich um reliefbildende transparente Glasfritten oder solche Glasfritten enthaltende Dekorfarben, welche reliefartige Dekore mit deutlich wahrnehmbaren Höhensprüngen und effektvollen Färbungen herzustellen gestatten.

Auf keramischen Erzeugnissen, wie Steinzeug, Steingut, Porzellan und anderen silikatischen Unterlagen, werden zur Dekoration vielfach Dekorfarben sowie Lüster- und Edelmetallpräparate aufgebracht und eingebrannt. Dekorfarben, welche aus einer Glasfritte und farbgebenden Komponenten, im allgemeinen glasur- und emailstabile Farbpigmente oder Farbfritten, bestehen, werden in üblichen direkten oder indirekten Verfahren aufgetragen, darunter auch Pinsel- und Spritzauftrag oder Siebdruck der in einem flüssigen Medium angepasteten Dekorfarbe auf die Oberfläche des keramischen Trägers. Das so hergestellte Dekor weist meist eine Dicke von $30 \pm 20$ µm auf, es läßt sich somit praktisch keine Reliefstruktur wahrnehmen.

Bei der Baukeramik und Schmuckkeramik besteht häufig der Wunsch, eine reliefartige Struktur auf der Oberfläche des keramischen Trägers zu erzeugen. Ein dickerer Auftrag der zuvor angesprochenen Dekorfarben ist zwar möglich, jedoch verlaufen Höhensprünge beim Brennvorgang derart, daß der reliefartige Charakter und damit die beabsichtigte Geometrie des Dekors erheblich gemindert werden.

Eine Verbesserung des reliefartigen Charakters des Dekors konnte nur dadurch erzielt werden, daß man anstelle der transparenten Glasfritte eine getrübt ausschmelzende Glasfritte in der Dekorfarbe einsetzte. Vorbekannte transparent ausschmelzende Glasfritten zeigen demgegenüber ein enges Schmelzintervall und damit eine unzureichende Strukturstabilität während des Schmelzens, so daß es zur Verflachung von Höhensprüngen kommt. Trüb ausschmelzende Glasfritten haben aber den Nachteil, daß hiermit praktisch nur opake Dekore zugänglich waren, womit keine effektvollen Farben, wie solche mit zum Beispiel Metallic- oder Perlglanz oder Interferenzeffekten, erzielt werden konnten.

Bekannt ist zwar auch, auf einer Glasur reliefartige Gegenstände aus Glas oder anderen Materialien mittels eines Kurzbrandes zu fixieren, jedoch wird hierdurch die Geometrie des Dekors begrenzt. Beipielsweise bereitet es Schwierigkeiten, mehrere Höhensprünge auf engerem Raum auszubilden.

Die RO-A 81434 offenbart ein Verfahren zur Herstellung eines reliefartigen Emaildekors aus Glasfritten, die Farbkomponenten enthalten können. Die Frittenzusammensetzung umfaßt PbO, $SiO_2$, $B_2O_3$, $Al_2O_3$ und 2 bis 5 Gew.-% ZnO sowie insgesamt 2 bis 5 Gew.-% Oxide aus der Reihe BaO, CaO, $TiO_2$, $Na_2O$ und $K_2O$.

Aufgabe der Erfindung ist somit, Mittel zur Herstellung eines reliefartigen Dekors mit ausgeprägten Höhensprüngen auf keramischen Oberflächen zur Verfügung zu stellen, welche verbesserte Eigenschaften aufweisen. Unter keramischen Oberflächen werden insbesondere jene von Erzeugnissen der Bau- und Kunstkeramik aus keramischem oder anderem silikatischen Material, unter ausgeprägten Höhensprüngen solche von mindestens 50 µm, im allgemeinen über 100 µm bis in den cm-Bereich, verstanden. Neben der reliefartigen Struktur des Dekors mit beliebiger Geometrie sollte das Dekor vorzugsweise auch in effektvoller Weise eingefärbt und/oder nachträglich mit einem farbgebenden Dekor versehen werden können.

Gefunden wurden Glasfritte enthaltende Mittel zur Herstellung eines reliefartigen Dekors auf keramischen Oberflächen, enthaltend eine transparente reliefbildende Glasfritte und farbgebende Komponenten, die dadurch gekennzeichnet sind, daß sie aus 70 bis 100 Gew.-% reliefbildender transparenter Glasfritte, 0 bis 30 Gew.-% farbgebenden Komponenten und 0 bis 5 Gew.-%, bezogen auf die Glasfritte, Stellmitteln bestehen und die reliefbildende Glasfritte aus 40 bis 60 Gew.-% Bleioxid, 20 bis 40 Gew.-% Siliciumdioxid, 3 bis 15 Gew.-% Boroxid, 3 bis 13 Gew.-% Aluminiumoxid, 0 bis 5 Gew.-% Alkalioxiden und 0 bis 5 Gew.-% Magnesium- und/oder Calciumoxid besteht. Die weiteren Ansprüche betreffen bevorzugte Ausführungsformen des Mittels sowie deren Verwendung.

Zur Herstellung eines reliefartigen Dekors auf keramischen Oberflächen wird ein erfindungsgemäßes Mittel verwendet; farbgebende Komponenten befinden sich in und/oder auf dem reliefbildenden Dekor; das reliefartige Dekor wird eingebrannt. Sofern in den erfindungsgemäßen Mitteln keine farbgebende Komponente enthalten ist, wird auf das ungebrannte oder gebrannte reliefartige Dekor eine farbgebende Dekoration, vorzugsweise ein edelmetallhaltiges Präparat oder ein Perlglanz- oder Lüsterpräparat, aufgebracht und dieses gemeinsam mit dem reliefartigen Dekor in einem separaten Dekorbrand eingebrannt.

Bevorzugte Mittel, welche im Verfahren Verwendung finden, stellen die sogenannten Dekorfarben dar, welche vorzugsweise aus 80 bis 99 Gew.-% reliefartiger Glasfritte und 1 bis 20 Gew.-% farbgebenden Komponenten, insbesondere Farbpigmenten einschließlich Weißpigmenten oder transparenten Farbfritten, bestehen und zusätzlich bis zu 5 Gew.-%, vorzugsweise 0 bis 2 Gew.-%, Stellmittel, bezogen auf die Glasfritte, enthalten können.

Unter Stellmitteln werden anorganische Hilfsmittel verstanden, welche die Verarbeitbarkeit der Dekorfarben und in gewissem Umfang auch die Qualität des Dekors günstig beeinflussen. Ein bevorzugtes Stellmittel ist hydratisiertes Aluminiumsilikat.

Die farbgebenden Komponenten der im erfindungsgemäßen Verfahren eingesetzten Mittel sind glasur- und emailstabil und im fertigen Erzeugnis vorzugsweise auch stabil gegen Säuren und Basen. Es kommen insbesondere infrage: Farbpigmente (a) aus der Reihe der färbenden Metalloxide, wie insbesondere Fe(III)-oxidhaltige Verbindungen, beispielsweise Hämatit und Fe-Glimmer; die Verwendung von Fe-Glimmer führt zu Dekoren mit Silberglanz.

Eine weitere Klasse Farbpigmente (b) umfaßt mit Metalloxiden beschichtete plättchenförmige Perlglanz- und Farbpigmente. Unter dieser Pigmentklasse (b) sind mit einer oder mehreren Metalloxidschichten beschichtete Glimmerpräparate, welche zusätzlich transparente Metallschichten oder Metalldots aufweisen können, besonders hervorzuheben - siehe z. B. US-PS 3,087,828, EP-A 0 045 851, DE-OS 37 31 174 und DE-OS 37 30 505. Solche Farbpigmente zeigen ausgeprägte Interferenzeffekte, wenn die Plättchen überwiegend in einer Ebene liegen. Bevorzugte Pigmente dieser Klasse enthalten Schichten aus $TiO_2$, $TiO_2/Fe_2O_3$, $SnO_2$, $SiO_2$, $SnO_2/Au$, $ZrO_2$.

Zu den geeigneten Farbpigmenten gehören auch Pigmente vom Spinell-, Einschluß- und Wirtsgittertyp. Unter den Spinell-Pigmenten sei beispielhaft Co-Al-Spinell genannt. Unter den Einschlußpigmenten sind besonders geeignet jene auf der Basis von Zirkoniumsilikat mit Einschlüssen aus z. B. Cadmium-Sulfoseleniden, Fe-titanat, Ruß, Co-Oxiden. Unter den Wirtsgitterpigmenten sind Zirkon-Vanadin-Blau und Zirkon-Praseodym-Gelb hervorzuheben. Für ein weißes reliefartiges Dekor eignen sich vorzugsweise Zirkoniumsilikat oder Ceroxid.

Als farbgebende Komponente können auch transparente Farbfritten mit der reliefbildenden transparenten Glasfritte kombiniert werden. Farbfritten enthalten färbende Metalloxide, wie solche von Cu, Co, Cr, Fe, Mn.

Die erfindungsgemäß hergestellten reliefartigen Dekore brauchen nicht durch und durch gefärbt oder pigmentiert zu sein, sondern es kann sich auf einem transparenten farblosen oder gefärbten bzw. pigmentierten reliefartigen Dekor eine zusätzlich dekorierende Schicht mit einer farbgebenden Komponente befinden. Bei dieser Oberflächendekoration, welche einen Teil oder die ganze Oberfläche des keramischen Erzeugnisses bedecken kann, handelt es sich vorzugsweise um edelmetallhaltige Schichten. Bei einer Dekoration mit Polier- oder Mattgoldpräparaten kann der Brand des farbgebenden Dekors gemeinsam mit dem Brand des reliefbildenden Dekors erfolgen. Eine Oberflächendekoration mit Glanzedelmetall, insbesondere Glanzgoldpräparaten, erfordert demgegenüber den Auftrag des Präparates auf das bereits eingebrannte reliefartige Dekor und einen zweiten Brand, im allgemeinen 30-60 Minuten bei 500-600 °C.

Es ist vorteilhaft, die zur Herstellung der reliefartigen Dekore erforderlichen Mittel hinsichtlich der Zusammensetzung der Glasfritte auf die einzelnen Klassen der farbgebenden Komponenten abzustimmen. Eine solche Anpassung ist dann besonders wichtig, wenn das Dekor ausgeprägte Höhensprünge aufweisen soll. Eine auf die färbende Komponente abgestimmte Frittenzusammensetzung erlaubt die Herstellung von Dekoren mit ausgeprägtem Relief mit räumlich eng benachbarten Höhensprüngen von über 100 $\mu$m; die Höhensprünge können auch einige mm und zum Teil sogar über 1 cm hoch sein.

Die nachfolgende Tabelle zeigt die Zusammensetzung bevorzugter Glasfritten, wie sie für die Anwendung mit bestimmten Klassen färbender Komponenten empfohlen wird. Im allgemeinen können die erfindungsgemäß verwendeten Glasfritten zusätzlich weitere Oxide in einer Menge von insgesamt unter 2 Gew.-%, vorzugsweise unter 1 Gew.-%, enthalten. Der Fachmann wird sich im Einzelfall durch einen Vorversuch ein Bild über die Eignung der Zusammensetzung seiner Fritte machen.

Zusätzlich enthält die Tabelle Hinweise über den Gehalt und bevorzugten Gehalt an Pigmenten bzw. der Farbfritte in den bevorzugten Mitteln zur Herstellung der erfindungsgemäßen reliefartigen Dekore.

Tabelle

| Bevorzugte Frittenzusammensetzung (Gew.-%) für Dekorfarben | | | |
|---|---|---|---|
| | Hämatitpigmente | mit Metalloxiden beschichteten plättchenförmige Pigmente oder Farbfritten | Pigmente auf $ZrSiO_4$-Basis |
| PbO | 45-50 | 50-60 | 40-45 |
| $SiO_2$ | 30-35 | 25-30 | 32-37 |
| $B_2O_3$ | 4-7 | 8-12 | 8-12 |
| $Al_2O$ | 6-10 | 3-7 | 6-10 |
| MgO | 0,1-1 | 1-3 | - |
| ZnO | 3-7 | - | |
| Alkalioxide | 0,1-1 | 0,1-1 | 2-5 |
| | Gew.-% Pigment bzw. Farbfritte in der Dekorfarbe | | |
| Pigment<br>Farbfritte | 3-15, bes. 5-10 | 5-20, bes. 10-15<br>3-10, bes. 5-6 | 5-15 |

Zur Herstellung eines erfindungsgemäßen reliefartigen Dekors wird auf die Oberfläche des keramischen Trägers in an sich bekannter Weise eine Paste aus einem flüssigen Medium und der reliefbildenden Glasfritte oder der Dekorfarbe der vorgenannten Zusammensetzung aufgetragen, das ungebrannte Dekor ggf. auf der Oberfläche farblich dekoriert und eingebrannt. Im Normalbrand brennt man 4-6 Stunden bei 700-800 °C, im Schnellbrand 30-60 Minuten bei 800 - 900 °C. Auch eine Oberflächendekoration des gebrannten reliefartigen Dekors, welcher ein Dekorbrand folgt, ist möglich.

Die Auftragung des Dekors kann direkt oder indirekt erfolgen, wobei an sich bekannte Verfahren, darunter Pinsel- oder Spritzauftrag und Siebdruck, infrage kommen. Das für den Auftrag erforderliche flüssige Medium wird in bekannter Weise auf die Applikationsart abgestimmt. Die für keramische Dekorationszwecke bekannten flüssigen Medien enthalten im allgemeinen Bindemittel, Lösemittel, Netzmittel, Weichmacher. Vorzugsweise dekoriert man glasiertes Steinzeug und glasiertes Steingut.

Die erfindungsgemäßen keramischen Erzeugnisse weisen nicht nur eine Reliefstruktur mit ausgeprägten Höhensprüngen auf, sondern sie sind auch mit effektvollen Färbungen versehen.

Beispiele 1 bis 5

Der folgenden Tabelle sind die Zusammensetzung der Glasfritten, die verwendeten farbgebenden Komponenten einschließlich der Hauptbestandteile derselben, die Zusammensetzung der Dekorfarben sowie die erzielten Farben und Effekte zu entnehmen.

Zur Herstellung der Mittel wurden die Glasfritten und farbgebenden Komponenten homogen miteinander gemischt - in der Kugelmühle. In den Beispielen 2 bis 4 war zusätzlich ein hydratisiertes Aluminiumsilikat in einer Menge von 1 Gew.-%, bezogen auf die Glasfritte, zugegen. Die erhaltenen Dekorfarben wurden unter Verwendung eines handelsüblichen Siebdruckmediums angepastet, wobei die Paste 65 Gew.-% Dekorfarbe enthielt. Mittels Siebdruck wurden die Pasten auf glasiertes Steingut aufgetragen und 50 Min. bei 850 °C gebrannt. Die erhaltenen Dekore zeigten die in der Tabelle angegebenen Farben und Farbeffekte und ein ausgeprägtes Relief mit Höhensprüngen über 100 $\mu$m.

Durch manuellen Auftrag von Pasten aus den Dekorfarben und einem hydrophilen Medium konnten in einfacher Weise Dekore mit Höhensprüngen von etlichen mm Höhe erzeugt werden.

4

| Zusammensetzung der Glasfritte (Gew.-%) | 1 | 2 | 3 | 4 | 5 |
|---|---|---|---|---|---|
| PbO | 47,0 | 53,9 | 53,9 | 53,9 | 43,4 |
| SiO$_2$ | 33,9 | 27,8 | 27,8 | 27,8 | 33,9 |
| B$_2$O$_3$ | 5,3 | 10,5 | 10,5 | 10,5 | 9,4 |
| Al$_2$O$_3$ | 7,9 | 5,0 | 5,0 | 5,0 | 8,6 |
| MgO | 0,5 | 2,2 | 2,2 | 2,2 | 0,1 |
| CaO | | 0,6 | 0,6 | 0,6 | 0,7 |
| K$_2$O | 0,1 | | | | 1,7 |
| Na$_2$O | | | | | 1,0 |
| Li$_2$O | | | | | 1,0 |
| ZnO | 5,2 | | | | |
| Pigment bzw. Farbfritte (Hauptbestandteile Gew.-%) | Hämatit-Pigment (96,3% Fe$_2$O$_3$, 1,9% SiO$_2$, 1% Al$_2$O$_3$) | Metalloxid beschichteter Glimmer (37,2% Fe$_2$O$_3$, 30,6% SiO$_2$, 27,7% Al$_2$O$_3$, 6,9% K$_2$O) | Farbfritten (48,9% SiO$_2$, 20,7% CuO, 15,2% B$_2$O$_3$, 5,1% Na$_2$O) | Farbfritten (40,4% SiO$_2$, 37,6% PbO, 5,3% B$_2$O$_3$, 3,9% Al$_2$O$_3$, 1% CaO) | Zirkon-silikat-Weißpigment (62,5% ZrO$_2$, 36,5% SiO$_2$) |
| Zusammensetzung der Dekorfarbe (Gew.-%) | | | | | |
| Pigment/Farbfritte | 10 | 15 | 5 | 6 | 10 |
| transparente Glasfritte | 90 | 84 | 94 | 93 | 90 |
| Stellmittel | 1 | 1 | 1 | 1 | |
| Farbe des Dekors | silbrig-glänzend | rot-satin metallic | türkis | blau | weiß |

**Patentansprüche**

**Patentansprüche für folgende Vertragsstaaten : AT, DE, FR, GB, IT, NL**

1. Glasfritte enthaltende Mittel zur Herstellung eines reliefartigen Dekors auf keramischen Oberflächen, enthaltend eine transparente reliefbildende Glasfritte und farbgebende Komponenten, dadurch gekennzeichnet,

daß sie aus 70 bis 100 Gew.-% reliefbildender transparenter Glasfritte, 0 bis 30 Gew.-% farbgebenden Komponenten und 0 bis 5 Gew.-%, bezogen auf die Glasfritte, Stellmitteln besteht und die reliefbildende Glasfritte aus 40 bis 60 Gew.-% Bleioxid, 20 bis 40 Gew.-% Siliciumdioxid, 3 bis 15 Gew.-% Boroxid, 3 bis 13 Gew.-% Aluminiumoxid, 0 bis 5 Gew.-% Alkalioxiden und 0 bis 5 Gew.-% Magnesium- und/oder Calciumoxid besteht.

2. Mittel nach Anspruch 1,
dadurch gekennzeichnet,
daß sie aus 80 bis 99 Gew.-% reliefbildender Glasfritte, 1 bis 20 Gew.-% farbgebenden Komponenten und zusätzlich Stellmittel in einer Menge von 0 bis 2 Gew.-%, bezogen auf die Glasfritte, bestehen.

3. Mittel nach Anspruch 1 oder 2,
dadurch gekennzeichnet,
daß als Stellmittel hydratisiertes Aluminiumsilikat anwesend ist.

4. Mittel nach Anspruch 2 oder 3,
dadurch gekennzeichnet,
daß sie aus 85 bis 95 Gew.-% einer Glasfritte der Zusammensetzung 40 bis 45 Gew.-% PbO, 32 bis 37 Gew.-% $SiO_2$, 8 bis 12 Gew.-% $B_2O_3$, 6 bis 10 Gew.-% $Al_2O_3$ und 2 bis 5 Gew.-% Alkalioxide und 5 bis 15 Gew.-% Pigmenten vom Spinell-, Einschluß- oder Wirtsgittertyp oder Weißpigmenten auf der Basis von $ZrSiO_4$ oder Ceroxid und 0 bis 2 Gew.-%, bezogen auf die Glasfritte, Stellmitteln besteht.

5. Mittel nach Anspruch 2 oder 3,
dadurch gekennzeichnet,
daß sie aus 80 bis 95 Gew.-% reliefbildender Glasfritte und 5 bis 20 Gew.-% mit Metalloxiden beschichteten plättchenförmigen Perlglanz- oder Farbglanzpigmenten und 0 bis 2 Gew.-%, bezogen auf die Glasfritte, Stellmitteln oder aus 3 bis 8 Gew.-% einer Farbfritte und 92 bis 97 Gew.-% reliefbildender Glasfritte und 0 bis 2 Gew.-%, bezogen auf die Glasfritte, Stellmitteln bestehen, wobei die reliefbildende Glasfritte aus 50 bis 60 Gew.-% PbO, 25 bis 30 Gew.-% $SiO_2$, 8 bis 12 Gew.-% $B_2O_3$, 3 bis 7 Gew.-% $Al_2O_3$, 1 bis 3 Gew.-% MgO und 0,1 bis 1 Gew.-% Alkalioxiden besteht.

6. Verwendung der Mittel nach den Ansprüchen 1 bis 5 zur Herstellung eines reliefartigen Dekors auf keramischen Oberflächen,
wobei man das Mittel in einem zum Dekorieren geeigneten flüssigen Medium anpastet und nach dem Dekorieren der Oberfläche des keramischen Trägers das Dekor im Schnellbrand bei 800 bis 900 °C oder Normalbrand bei 700 bis 800 °C einbrennt.

7. Verwendung nach Anspruch 6,
wobei man vor und/oder nach dem Brand des reliefartigen Dekors mindestens auf Teile der Oberfläche desselben edelmetallhaltige Präparate oder Lüsterpräparate aufträgt und einbrennt.

8. Verwendung nach Anspruch 7,
wobei man nach dem Brand des reliefartigen Dekors ein Glanzedelmetallpräparat aufträgt und bei 500 bis 600 °C einbrennt.

**Patentansprüche für folgenden Vertragsstaat : ES**

1. Verfahren zur Herstellung eines reliefartigen Dekors auf keramischen Oberflächen durch Anpasten eines eine transparente reliefbildende Glasfritte und farbgebende Komponenten enthaltenden Mittels in einem zum Dekorieren geeigneten flüssigen Mediums, Dekorieren der Oberfläche des keramischen Trägers und danach Einbrennen des Dekors im Schnellbrand bei 800 bis 900 °C oder Normalbrand bei 700 bis 800 °C,
dadurch gekennzeichnet,
daß man ein aus 70 bis 100 Gew.-% reliefbildender transparenter Glasfritte, 0 bis 30 Gew.-% farbgebenden Komponenten und 0 bis 5 Gew.-%, bezogen auf die Glasfritte, Stellmitteln bestehendes Mittel verwendet, wobei die reliefbildende Glasfritte aus 40 bis 60 Gew.-% Bleioxid, 20 bis 40 Gew.-% Siliciumdioxid, 3 bis 15 Gew.-% Boroxid, 3 bis 13 Gew.-% Aluminiumoxid, 0 bis 5 Gew.-% Alkalioxiden und 0 bis 5 Gew.-% Magnesium- und/oder Calciumoxid besteht.

**2.** Verfahren nach Anspruch 1,
dadurch gekennzeichnet,
daß man ein aus 80 bis 99 Gew.-% reliefbildender Glasfritte, 1 bis 20 Gew.-% farbgebenden Komponenten und zusätzlich Stellmittel in einer Menge von 0 bis 2 Gew.-%, bezogen auf die Glasfritte, bestehendes Mittel verwendet.

**3.** Mittel nach Anspruch 1 oder 2,
dadurch gekennzeichnet,
daß das zu verwendete Mittel als Stellmittel hydratisiertes Aluminiumsilikat enthält.

**4.** Verfahren nach Anspruch 2 oder 3,
dadurch gekennzeichnet,
daß das zu verwendende Mittel aus 85 bis 95 Gew.-% einer Glasfritte der Zusammensetzung 40 bis 45 Gew.-% PbO, 32 bis 37 Gew.-% $SiO_2$, 8 bis 12 Gew.-% $B_2O_3$, 6 bis 10 Gew.-% $Al_2O_3$ und 2 bis 5 Gew.-% Alkalioxide und 5 bis 15 Gew.-% Pigmenten vom Spinell-, Einschluß- oder Wirtsgittertyp oder Weißpigmenten auf der Basis von $ZrSiO_4$ oder Ceroxid und 0 bis 2 Gew.-%, bezogen auf die Glasfritte, Stellmitteln besteht.

**5.** Verfahren nach Anspruch 2 oder 3,
dadurch gekennzeichnet,
daß das zu verwendende Mittel aus 80 bis 95 Gew.-% reliefbildender Glasfritte und 5 bis 20 Gew.-% mit Metalloxiden beschichteten plättchenförmigen Perlglanz- oder Farbglanzpigmenten und 0 bis 2 Gew.-%, bezogen auf die Glasfritte, Stellmitteln oder aus 3 bis 8 Gew.-% einer Farbfritte und 92 bis 97 Gew.-% reliefbildender Glasfritte und 0 bis 2 Gew.-%, bezogen auf die Glasfritte, Stellmitteln besteht, wobei die reliefbildende Glasfritte auf 50 bis 60 Gew.-% PbO, 25 bis 30 Gew.-% $SiO_2$, 8 bis 12 Gew.-% $B_2O_3$, 3 bis 7 Gew.-% $Al_2O_3$, 1 bis 3 Gew.-% MgO und 0,1 bis 1 Gew.-% Alkalioxiden besteht.

**6.** Verfahren nach einem der Ansprüche 1 bis 5,
dadurch gekennzeichnet,
daß man vor und/oder nach dem Brand des reliefartigen Dekors mindestens auf Teile der Oberfläche desselben edelmetallhaltige Präparate oder Lüsterpräparate aufträgt und einbrennt.

**7.** Verfahren nach Anspruch 6,
dadurch gekennzeichnet,
daß man nach dem Brand des reliefartigen Dekors ein Glanzedelmetallpräparat aufträgt und bei 500 bis 600 °C einbrennt.

**Claims**

**Claims for the following Contracting States : AT, DE, FR, GB, IT, NL**

**1.** Media, containing glass frit, for producing a relief decoration on ceramic surfaces, where the said media contain a transparent, relief-forming glass frit and colouring components, and are
characterised in that
they consist of from 70 to 100% by weight of relief-forming transparent glass frit, from 0 to 30% by weight of colouring components and from 0 to 5% by weight, referred to the glass frit, of floating agents and the relief-forming glass frit consists of from 40 to 60% by weight of lead oxide, from 20 to 40% by weight of silicon dioxide, from 3 to 15% by weight of boric oxide, from 3 to 13% by weight of aluminium oxide, from 0 to 5% by weight of alkali oxides and from 0 to 5% by weight of magnesium oxide and/or calcium oxide.

**2.** The media according to claim 1,
characterised in that
they consist of from 80 to 99% by weight of relief-forming glass frit, from 1 to 20% by weight of colouring components and in addition floating agents in a quantity of from 0 to 2% by weight, referred to the glass frit.

**3.** The media according to claim 1 or 2,
characterised in that

EP 0 419 843 B1

hydrated aluminium silicate is present as a floating agent.

4. The media according to claim 2 or 3,
characterised in that
they consist of from 85 to 95% by weight of a glass frit having the composition 40 to 45% by weight of PbO, 32 to 37% by weight of $SiO_2$, 8 to 12% by weight of $B_2O_3$, 6 to 10% by weight of $Al_2O_3$ and 2 to 5% by weight of alkali oxides and from 5 to 15% by weight of pigments of the spinel type, the inclusion type or the host lattice type or white pigments based on $ZrSiO_4$ or cerium oxide and from 0 to 2% by weight, referred to the glass frit, of floating agents.

5. The media according to claim 2 or 3,
characterised in that
they consist of from 80 to 95% by weight of relief-forming glass frit and from 5 to 20% by weight of pearly lustre pigments or bright coloured pigments in the form of flakes and coated with metal oxides, and from 0 to 2% by weight, referred to the glass frit, of floating agents, or they consist of from 3 to 8% by weight of a coloured frit and from 92 to 97% by weight of relief-forming glass frit and from 0 to 2% by weight, referred to the glass frit, of floating agents, wherein the relief-forming glass frit consists of from 50 to 60% by weight of PbO, from 25 to 30% by weight of $SiO_2$, from 8 to 12% by weight of $B_2O_3$, from 3 to 7% by weight of $Al_2O_3$, from 1 to 3% by weight of MgO and from 0.1 to 1% by weight of alkali oxides.

6. The use of the media according to claims 1 to 5 for the production of a relief decoration on ceramic surfaces, wherein the medium is made into a paste in a liquid medium suitable for decoration and, after the surface of the ceramic substrate has been decorated, the decoration is fired on at a temperature of from 800 to 900°C in a rapid firing or from 700 to 800°C in a standard firing.

7. The use according to claim 6,
wherein prior to and/or after firing the relief decoration, noble metal-containing preparations or lustre preparations are applied to at least parts of the same and fired on.

8. The use according to claim 7,
wherein after firing the relief decoration, a bright noble metal preparation is applied and fired on at a temperature of from 500 to 600°C.

**Claims for the following Contracting State : ES**

1. Process for producing a relief decoration on ceramic surfaces by preparing a paste of a medium containing a transparent relief-forming glass frit and colouring components in a liquid medium suitable for decoration, decoration of the surface of the ceramic substrate and subsequent firing of the decoration at a temperature of from 800 to 900°C in a rapid firing or from 700 to 800°C in a standard firing,
characterised in that
a medium is used which consists of from 70 to 100% by weight of relief-forming transparent glass frit, from 0 to 30% by weight of colouring components and from 0 to 5% by weight, referred to the glass frit, of floating agents, wherein the relief-forming glass frit consists of from 40 to 60% by weight of lead oxide, from 20 to 40% by weight of silicon dioxide, from 3 to 15% by weight of boric oxide, from 3 to 13% by weight of aluminium oxide, from 0 to 5% by weight of alkali oxides and from 0 to 5% by weight of magnesium oxide and/or calcium oxide.

2. The process according to claim 1,
characterised in that
a medium is used which consists of from 80 to 99% by weight of relief-forming glass frit, from 1 to 20% by weight of colouring components and in addition floating agents in a quantity of from 0 to 2% by weight, referred to the glass frit.

3. The medium according to claim 1 or 2,
characterised in that
the medium to be used contains hydrated aluminium silicate as a floating agent.

8

**4.** The process according to claim 2 or 3,
characterised in that
the medium to be used consists of from 85 to 95% by weight of a glass frit having the composition 40 to 45% by weight of PbO, 32 to 37% by weight of $SiO_2$, 8 to 12% by weight of $B_2O_3$, 6 to 10% by weight of $Al_2O_3$ and 2 to 5% by weight of alkali oxides and from 5 to 15% by weight of pigments of the spinel type, the inclusion type or the host lattice type or white pigments based on $ZrSiO_4$ or cerium oxide and from 0 to 2% by weight, referred to the glass frit, of floating agents.

**5.** The process according to claim 2 or 3,
characterised in that
the medium to be used consists of from 80 to 95% by weight of relief-forming glass frit and from 5 to 20% by weight of pearly lustre pigments or bright coloured pigments in the form of flakes and coated with metal oxides, and from 0 to 2% by weight, referred to the glass frit, of floating agents, or of from 3 to 8% by weight of a coloured frit and from 92 to 97% by weight of relief-forming glass frit and from 0 to 2% by weight, referred to the glass frit, of floating agents, wherein the relief-forming glass frit consists of from 50 to 60% by weight of PbO, from 25 to 30% by weight of $SiO_2$, from 8 to 12% by weight of $B_2O_3$, from 3 to 7% by weight of $Al_2O_3$, from 1 to 3% by weight of MgO and from 0.1 to 1% by weight of alkali oxides.

**6.** The process according to one of claims 1 to 5,
characterised in that
prior to and/or after firing the relief decoration, noble metal-containing preparations or lustre preparations are applied to at least parts of the surface of the same and fired on.

**7.** The process according to claim 6,
characterised in that
after firing the relief decoration, a bright noble metal preparation is applied and fired on at a temperature of from 500 to 600 °C.

**Revendications**
**Revendications pour les Etats contractants suivants : AT, DE, FR, GB, IT, NL**

**1.** Composition contenant des frittes de verre pour la production d'un décor en relief sur des surfaces en céramique renfermant une fritte de verre transparente formant un relief, et des composants colorants, caractérisée en ce qu'elle est formée de 70 à 100 % en poids d'une fritte de verre transparente formant un relief, de 0 à 30 % en poids de composants colorants et de 0 à 5 % en poids rapporté à la fritte de verre, d'agents de fixation et la fritte de verre formant le relief est constituée de 40 à 60 % en poids d'oxyde de plomb, de 20 à 40 % en poids de dioxyde de silicium, de 3 à 15 % en poids d'oxyde de bore, de 3 à 13 % en poids d'oxyde d'aluminium, de 0 à 5 % en poids d'oxydes de métal alcalin et de 0 à 5 % en poids d'oxyde de magnésium et/ou de calcium.

**2.** Composition selon la revendication 1, caractérisée en ce qu'elle est formée de 80 à 99 % en poids de fritte de verre formant le relief, de 1 à 20 % en poids de composants colorants et en supplément d'un agent de fixation en quantité allant de 0 à 2 % en poids rapporté à la fritte de verre.

**3.** Compositions selon la revendication 1 ou 2, caractérisées en ce que comme agent de fixation un silicate d'aluminium hydraté est présent.

**4.** Composition selon la revendication 2 ou 3, caractérisée en ce qu'elle est formée de 85 à 95 % en poids d'une fritte de verre de composition :
40 à 45 % en poids de PbO
32 à 37 % en poids de $SiO_2$
8 à 12 % en poids de $B_2O_3$
6 à 10 % en poids de $Al_2O_3$
2 à 5 % en poids d'oxyde alcalin
5 à 15 % en poids de pigments du type spinelle, du type d'inclusion ou du type de grille hôte ou bien de pigment de blanc à base de $SiO_4Zr$ ou d'oxyde de cérium, et 0 à 2 % en poids rapporté à la fritte de verre d'agents de fixation.

5. Composition selon la revendication 2 ou 3, caractérisée en ce qu'elle est formée de 80 à 95 % en poids de fritte de verre formant le relief et de 5 à 20 % en poids de pigments nacrés ou de couleur brillante sous forme de lamelles recouvertes d'oxydes métalliques et de 0 à 2 % en poids rapporté à la fritte de verre, d'agents de fixation ou de 3 à 8 % en poids d'une fritte de coloration et de 92 à 97 % en poids d'une fritte de verre formant le relief et de 0 à 2 % en poids rapporté à la fritte de verre, d'agents de fixation, dans laquelle la fritte de verre qui forme le relief consiste en 50 à 60 % en poids de PbO, de 25 à 30 % en poids de $SiO_2$, de 8 à 12 % en poids de $B_2O_3$, de 3 à 7 % en poids d'$Al_2O_3$, de 1 à 3 % en poids de MgO et de 0,1 à 1 % en poids d'oxyde de métaux alcalins.

6. Utilisation des compositions selon les revendications 1 à 5 pour la production d'un décor en relief sur des surfaces en céramique dans lequel on met en pâte la composition dans un milieu liquide approprié pour la décoration et on calcine après la décoration de la surface du support céramique, le décor dans une cuisson rapide de 800 à 900°C ou en cuisson normale de 700 à 800°C.

7. Utilisation selon la revendication 6, dans laquelle on applique avant et/ou après la cuisson du décor en relief, au moins sur une partie de la surface de celui-ci, des préparation contenant des métaux nobles ou des préparations de lustre et on calcine.

8. Utilisation selon la revendication 7, dans laquelle on applique après la cuisson du décor en relief une préparation de métal noble brillant et on calcine de 500 à 600°C.

**Revendications pour l'Etat contractant suivant : ES**

1. Procédé d'obtention d'un décor en relief sur des surfaces en céramique par mise en pâte d'un agent contenant une fritte de verre formant le relief, transparente et des composants colorants dans un milieu liquide approprié pour la décoration, par décoration des surfaces du support céramique et ensuite calcination du décor dans une cuisson rapide à 800 à 900°C ou dans une cuisson normale à 700 à 800°C, caractérisé en ce que l'on utilise un agent formé de 70 à 100 % en poids d'une fritte de verre transparente formant le relief , 0 à 30 % en poids des composants colorants et de 0 à 5 % en poids rapporté à la fritte de verre constituée d'agent de fixation, composition dans laquelle la fritte de verre qui forme le relief est constituée de 40 à 60 % en poids d'oxyde de plomb, de 20 à 40 % en poids de dioxyde de silicium, de 3 à 15 % en poids d'oxyde de bore, de 3 à 13 % en poids d'oxyde d'aluminium, de 0 à 5 % en poids d'oxydes de métaux alcalins et de 0 à 5 % en poids d'oxyde de magnésium et/ou de calcium.

2. Procédé selon la revendication 1 caractérisé en ce que l'on utilise un agent formée de 80 à 99 % en poids d'une fritte de verre formant le relief, de 1 à 20 % en poids de composants colorants et en supplément d'un agent de fixation en quantité allant de 0 à 2 % en poids rapporté à la fritte de verre.

3. Procédé selon la revendication 1 ou 2, caractérisé en ce que l'agent à utiliser renferme en tant qu'agent de fixation du silicate d'aluminium hydraté.

4. Procédé selon la revendication 2 ou 3, caractérisé en ce que l'agent à utiliser consiste en 85 à 95 % en poids d'une fritte de verre de composition : de 40 à 45 % en poids de PbO, 32 à 37 % en poids de $SiO_2$, 8 à 12 % en poids de $B_2O_3$, 6 à 10 % en poids d'$Al_2O_3$ et de 2 à 5 % en poids d'oxyde alcalin et de 5 à 15 % en poids de pigments du type spinelle, inclusion ou grille hôte ou pigments de blanc, à base de $SiO_4Zr$ ou d'oxyde de cérium et de 0 à 2 % en poids rapporté à la fritte de verre, d'agents de fixation.

5. Procédé selon la revendication 2 ou 3, caractérisé en ce que l'agent à utiliser est constitué de 80 à 95 % en poids de fritte de verre formant le relief, et de 5 à 20 % en poids de pigments nacrés ou de lustre lamellaires recouverts d'oxydes métalliques et de 0 à 2 % en poids rapporté à la fritte de verre, d'agents de fixation ou de 3 à 8% en poids d'une fritte colorée ou bien de 92 à 97 % en poids de fritte de verre formant le relief et de 0 à 2 % en poids, rapporté à la fritte de verre d'agents de fixation dans laquelle la fritte de verre qui forme le relief consiste en 50 à 60 % en poids de PbO, 25 à 30 % en poids de $SiO_2$, 8 à 12 % en poids de $B_2O_3$, 3 à 77 % en poids d'$Al_2O_3$, 1 à 3 % en poids de MgO et 0,1 à 1 % en poids d'oxydes alcalins.

6. Procédé selon l'une des revendications 1 à 5, caractérisé en ce que l'on applique avant et/ou après la cuisson du décor en relief, au moins sur des parties de la surface de celle-ci, des préparations contenant des métaux nobles ou des préparations de lustre et que l'on calcine.

7. Procédé selon la revendication 6, caractérisé en ce que l'on applique après la cuisson du décor en relief une préparation de métal noble brillante et que l'on calcine à 500 à 600°C.